# EUROPEAN PATENT APPLICATION

(11) **EP 4 550 443 A1**
(43) Date of publication of application: **07.05.2025**
(21) Application number: 23842006.1
(22) Date of filing: 25.06.2023
(51) Int. Cl.: H01M 4/13

(54) **POSITIVE ELECTRODE PLATE, SECONDARY BATTERY, BATTERY MODULE, BATTERY PACK AND ELECTRIC DEVICE**

(30) Priority: 22.07.2022 CN 202210866072
(71) Applicant: Contemporary Amperex Technology (Hong Kong) Limited, Central, Hong Kong (CN)
(72) Inventor: WANG, Donghao, Ningde, Fujian 352100 (CN); XIE, Haotian, Ningde, Fujian 352100 (CN); JING, Erdong, Ningde, Fujian 352100 (CN); ZHANG, Nannan, Ningde, Fujian 352100 (CN)
(74) Representative: Gong, Jinping
(86) International application number: PCT/CN2023/102065
(87) International publication number: WO 2024/016940

(57) **Abstract**

This application relates to a positive electrode plate, a secondary battery, a battery module, a battery pack, and an electrical device. The positive electrode plate includes a current collector and a lithium supplement layer and a positive active layer that are sequentially loaded onto a surface of the current collector; and constituents of the lithium supplement layer include a positive electrode lithium supplement material, a solid electrolyte material, and a conductive agent. The electrode plate can reduce the gas production amount of the secondary battery while maintaining a significant lithium supplement effect, thereby improving the cycle performance of the secondary battery.

## Description

This application claims priority to Chinese Patent Application No. 202210866072.9, filed with the China National Intellectual Property Administration on July 22, 2022 and entitled "POSITIVE ELECTRODE PLATE, SECONDARY BATTERY, BATTERY MODULE, BATTERY PACK, AND ELECTRICAL DEVICE", which is incorporated herein by reference in its entirety.

### TECHNICAL FIELD

This application relates to the technical field of batteries, and in particular, to a positive electrode plate, a secondary battery, a battery module, a battery pack, and an electrical device.

### BACKGROUND

A lithium secondary battery that employs a nonaqueous electrolyte is characterized by excellent cycle performance, excellent safety performance, cost-effectiveness, environment-friendliness, and the like, and is a hot topic of concern in the field of secondary batteries. With the development of science and technology, the rapidly developing electric vehicles and energy storage industry have put forward higher requirements on the energy density, cost-effectiveness, cycle performance, and safety of the secondary batteries represented by lithium-ion batteries.

A secondary battery such as a lithium-ion battery mainly includes five parts: a positive electrode, a negative electrode, a separator, an electrolyte solution, and a shell, and generates electrical energy mainly by the movement of lithium ions between the positive electrode and the negative electrode. During charging, lithium ions are deintercalated from the positive electrode, and intercalated into the negative electrode through an electrolyte. During discharging, the contrary is true. During a first charge-discharge cycle of a lithium secondary battery, a solid electrolyte solution (SEI) film is formed, thereby consuming some reversible lithium ions, resulting in a decrease in the number of effective lithium ions, directly leading to a capacity loss of the battery, and in turn, impairing the cycle performance of the battery. Therefore, in conventional technology, lithium supplementation is usually performed on the positive electrode or negative electrode of the secondary battery to improve the first-cycle Coulombic efficiency of the secondary battery. However, conventional positive electrode lithium supplement materials are prone to side reactions with air, moisture, or electrolyte solution to form inactive by-products and produce gas. The progressive accumulation of gas may cause the secondary battery to swell, thereby adversely affecting the performance of the secondary battery, or even giving rise to safety accidents.

Therefore, the conventional technology still needs to be improved.

### SUMMARY

According to various embodiments of this application, this application provides a positive electrode plate, a secondary battery, a battery module, a battery pack, and an electrical device.

This application is implemented through the following technical solutions:

According to a first aspect of this application, a positive electrode plate is provided. The positive electrode plate includes a current collector and a lithium supplement layer and a positive active layer that are sequentially loaded onto a surface of the current collector.

Constituents of the lithium supplement layer include a positive electrode lithium supplement material, a solid electrolyte material, and a conductive agent.

In the positive electrode plate, on the one hand, a specific double-layer structure is disposed on the current collector. A lithium supplement layer and a positive active layer are formed sequentially on the surface of the current collector to prevent the electrolyte solution from excessively penetrating into the lithium supplement layer, thereby avoiding the electrolyte solution from contacting the positive electrode lithium supplement material to produce side reactions. On the other hand, the constituents of the lithium supplement layer include a positive electrode lithium supplement material, a solid electrolyte material, and a conductive agent. The solid electrolyte material can provide a high ion conductivity, and coordinate with the conductive agent to construct a superior ion- and electron-conducting network, so that the lithium supplement layer can reduce the gas production amount of the secondary battery while maintaining a significant lithium supplement effect, thereby improving the cycle performance of the secondary battery.

In any embodiment of this application, a mass ratio of the solid electrolyte material to the conductive agent is (1 to 11): 1.

Optionally, the mass ratio of the solid electrolyte material to the conductive agent is (1 to 10): 1.

By controlling the mass ratio of the solid electrolyte material to the conductive agent, the lithium supplement layer is caused to reach a state of balance of ionic conductivity and electronic conductivity. Even after the capacity of the positive electrode lithium supplement material is fully released, the superior ionic or electronic conductive network can still maintain a high electronic conductivity of the secondary battery, thereby further improving the cycle performance of the secondary battery.

In any embodiment of this application, a total mass percent of the solid electrolyte material and the conductive agent in the lithium supplement layer is not greater than 60%.

In any embodiment of this application, a total mass percent of the solid electrolyte material and the conductive agent in the lithium supplement layer is 10% to 60%.

In any embodiment of this application, a mass percent of the positive electrode lithium supplement material in the lithium supplement layer is 40% to 95%.

In any embodiment of this application, the constituents of the lithium supplement layer further include a binder. A mass percent of the binder in the lithium supplement layer is 0 to 10%.

In any embodiment of this application, a porosity of the lithium supplement layer is 3% to 7%.

In any embodiment of this application, the constituents of the positive active layer include a positive active material, a conductive agent, and a binder.

In any embodiment of this application, based on a total mass of the positive electrode lithium supplement material and the positive active material, a mass percent of the positive electrode lithium supplement material is 1% to 15%.

The energy density of the secondary battery can be further increased by controlling the mass percent of the positive electrode lithium supplement material.

In any embodiment of this application, in the positive active layer, a mass percent of the positive active material is 80% to 90%, a mass percent of the binder is 5% to 10%, and a mass percent of the conductive agent is 5% to 10%.

In any embodiment of this application, an ionic conductivity of the solid electrolyte material at 25 °C is not less than 1 mS/cm.

In any embodiment of this application, the solid electrolyte material includes at least one of a sulfide solid electrolyte material, an oxide solid electrolyte material, a halide solid electrolyte material, or a polymer solid electrolyte material.

In any embodiment of this application, the positive electrode lithium supplement material includes at least one of Li₂M1O₂, Li₂M2O₃, Li₅FeₓM3₍₁₋ₓ₎O₄, or Li₆Mn_{y}M4_{(1-y)}O₄.

In such chemical formulas, M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru; and 0 ≤ x ≤ 1, and 0 ≤ y ≤ 1.

A second aspect of this application provides a secondary battery. The secondary battery includes the positive electrode plate disclosed in the first aspect.

A third aspect of this application provides a battery module. The battery module includes the secondary battery disclosed in the second aspect.

A fourth aspect of this application provides a battery pack. The battery pack includes the secondary battery disclosed in the second aspect or the battery module disclosed in the third aspect.

A fifth aspect of this application provides an electrical device. The electrical device includes at least one of the secondary battery disclosed in the second aspect, the battery module disclosed in the third aspect, or the battery pack disclosed in the fourth aspect.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic diagram of a secondary battery according to an embodiment;
FIG. 2 is an exploded view of FIG. 1;
FIG. 3 is a schematic diagram of a battery module according to an embodiment;
FIG. 4 is a schematic diagram of a battery pack according to an embodiment;
FIG. 5 is an exploded view of FIG. 4; and
FIG. 6 is a schematic diagram of an electrical device powered by a battery according to an embodiment.

List of reference numerals:
1. battery pack; 2. upper box; 3. lower box; 4. battery module; 5. secondary battery; 51. housing; 52. electrode assembly; 53. cover plate; 6. electrical device.

### DETAILED DESCRIPTION OF EMBODIMENTS

To make the above objectives, features, and advantages of this application more apparent and comprehensible, the following describes specific embodiments of this application in detail. Many details are expounded in the following description to facilitate thorough understanding of this application. However, this application can be implemented in many other ways different from those described herein. A person skilled in the art may make similar improvements without departing from the essence of this application. Therefore, this application is not limited to the specific embodiments disclosed below.

In this application, unless otherwise expressly specified and qualified, the terms such as "mounting", "concatenation", "connection", and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In addition, the technical terms such as "first" and "second" are used merely for ease of description, but not to indicate or imply relative importance or implicitly specify the number of technical features mentioned. Therefore, the features preceded by "first" or "second" may explicitly or implicitly include at least one of such features. In the description of this application, unless otherwise expressly specified, "a plurality of" means at least two, for example, two, three, or more.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

According to an embodiment of this application, a positive electrode plate is provided. The positive electrode plate includes a current collector and a lithium supplement layer and a positive active layer that are sequentially loaded onto a surface of the current collector.

Constituents of the lithium supplement layer include a positive electrode lithium supplement material, a solid electrolyte material, and a conductive agent.

In the positive electrode plate, on the one hand, a specific double-layer structure is employed, so that a lithium supplement layer and a positive active layer are formed sequentially on the surface of the current collector to prevent the electrolyte solution from excessively penetrating into the lithium supplement layer, thereby avoiding the electrolyte solution from contacting the positive electrode lithium supplement material to produce side reactions. On the other hand, the constituents of the lithium supplement layer include a positive electrode lithium supplement material, a solid electrolyte material, and a conductive agent. The solid electrolyte material can provide a high ion conductivity, and coordinate with the conductive agent to construct a superior ion- and electron-conducting network, so that the lithium supplement layer can reduce the gas production amount of the secondary battery while maintaining a significant lithium supplement effect, thereby improving the cycle performance of the secondary battery.

In some embodiments, a mass ratio of the solid electrolyte material to the conductive agent is (1 to 11): 1.

In some embodiments, a mass ratio of the solid electrolyte material to the conductive agent is (1 to 10): 1.

By controlling the mass ratio of the solid electrolyte material to the conductive agent, the lithium supplement layer is caused to reach a state of balance of ionic conductivity and electronic conductivity. Even after the capacity of the positive electrode lithium supplement material is fully released, the superior ionic or electronic conductive network can still maintain a high electronic conductivity of the secondary battery, thereby further improving the cycle performance of the secondary battery.

The value range "(1 to 10): 1" includes the minimum and maximum values of the range, and every value between the minimum value and the maximum value. Specific examples of the value in the value range include, but are not limited to, the individual values enumerated in the embodiments and 1: 1, 1.2: 1, 1.5: 1, 1.8: 1, 2: 1, 2.1: 1, 2.5: 1, 3.5: 1, 4: 1, 4.5: 1, 5: 1, 5.5: 1, 6: 1, 6.5: 1, 7: 1, 7.5: 1, 8: 1, 8.5: 1, 9: 1, 9.5: 1, and 10: 1.

In some embodiments, the total mass percent of the solid electrolyte material and the conductive agent in the lithium supplement layer is not greater than 60%.

Understandably, "the total mass percent of the solid electrolyte material and the conductive agent is not greater than 60%" means that the ratio of the total mass of the solid electrolyte material and the conductive agent to the total mass of the lithium supplement layer is not greater than 60%.

In some embodiments, the total mass percent of the solid electrolyte material and the conductive agent is 10% to 60%.

The conductive agent may be a conductive agent commonly used in the art, including but not limited to, at least one of graphite, carbon nanotubes, nanofibers, carbon black, or graphene. Specifically, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

In some embodiments, the ionic conductivity of the solid electrolyte material at 25 °C is not less than 1 mS/cm.

In other words, the ionic conductivity of the solid electrolyte material at 25 °C is greater than or equal to 1 mS/cm.

In some embodiments, the solid electrolyte material includes at least one of a sulfide solid electrolyte material, an oxide solid electrolyte material, a halide solid electrolyte material, or a polymer solid electrolyte material.

Examples of the solid electrolyte material include, but are not limited to:
a polymer solid electrolyte material (SPE), formed from a polymer matrix (such as polyester, polyenzyme, or polyamine) and a lithium salt (such as LiClO₄, LiAsF₄, LiPF₆, or LiBF₄), where the polymer matrix may be at least one selected from polyester, polyenzyme, or polyamine, and the lithium salt may be at least one selected from LiClO₄, LiAsF₄, LiPF₆, or LiBF₄.

Common SPEs include polyethylene oxide (PEO), polyacrylonitrile (PAN), polyvinylidene difluoride (PVDF), polymethyl methacrylate (PMMA), polypropylene oxide (PPO), polyvinylidene dichloride (PVDC), and a single-ion polymer electrolyte.

Further, the polymer matrix may be hybridized with inorganic particles. The inorganic particles include metal oxide nanoparticles such as MgO, Al₂O₃, and SiO₂ as well as at least one of zeolite, montmorillonite, or the like. Such inorganic particles are added to disrupt the order of the polymer segments in the matrix and reduce the crystallinity. The interactions between the polymer, the lithium salt, and the inorganic particles increase the lithium ion transport channels, and increase the conductivity and the ion migration number. The inorganic fillers can also serve to adsorb trace impurities (such as moisture) in the composite electrolyte and improve mechanical properties.

Depending on the material structure, the oxide solid electrolyte material may be categorized into crystalline electrolyte and glassy (amorphous) electrolyte. The crystalline electrolyte includes perovskite electrolyte, NASICON electrolyte, LISICON electrolyte, garnet electrolyte, and the like. An example of the glassy oxide electrolyte is LiPON electrolyte.

The sulfide solid electrolyte material may be a sulfide crystalline solid electrolyte, a sulfide glassy solid electrolyte, a glassy ceramic solid electrolyte, or the like. The most typical sulfide crystalline solid electrolyte is thio-LISICON, represented by Li₍₄₋ₓ₎Ge₍₁₋ₓ₎PₓS₄, where 0 < x < 1.

A glassy electrolyte typically includes a network former such as P₂S₅, SiS₂, or B₂S₃ and a network modifier Li₂S. The systems of the glassy electrolyte mainly include Li₂S-P₂S₅, Li₂S-SiS₂, and Li₂S-B₂S₃.

In some embodiments, the sulfide solid electrolyte material includes at least one of the following systems: Li₂S-GeS₂, Li₂S-P₂S₅, Li₂S-SiS₂, or, Li₂S-MeS₂-P₂S₅, where Me is at least one of Si, Ge, Sn, or Al.

In some embodiments, the sulfide solid electrolyte material includes at least one of Li₃PS₄ or Li₇P₃S₁₁.

In some embodiments, the mass percent of the positive electrode lithium supplement material in the lithium supplement layer is 40% to 95%.

The value range "40% to 95%" includes the minimum and maximum values of the range, and every value between the minimum value and the maximum value. Specific examples of the value in the value range include, but are not limited to, the individual values enumerated in the embodiments and 40%, 45%, 50%, 55%, 60%, 65%, 70%, 75%, 80%, 85%, 90%, or 95%.

The positive electrode lithium supplement material may be a lithium supplement material commonly used in the art.

In some embodiments, the positive electrode lithium supplement material includes at least one of Li₂M1O₂, Li₂M2O₃, Li₅FeₓM3₍₁₋ₓ₎O₄, or Li₆Mn_{y}M4_{(1-y)}O₄.

In the chemical formulas above, M1 includes at least one of Ni, Mn, Cu, Fe, Cr, or Mo; M2 includes at least one of Ni, Mn, Fe, Mo, Zr, Si, Cu, Cr, or Ru; M3 includes at least one of Al, Nb, Co, Mn, Ni, Mo, Ru, or Cr; and M4 includes at least one of Ni, Fe, Cu, or Ru; and 0 ≤ x ≤ 1, and 0 ≤ y ≤ 1.

In some embodiments, the constituents of the lithium supplement layer further include a binder. The mass percent of the binder in the lithium supplement layer is 0 to 10%.

Understandably, the lithium supplement layer may be doped with the binder or not. The binder is a commonly used binder in the art, and may be at least one of polypropylene, polyethylene, polyvinylidene difluoride, vinylidene fluoride-hexafluoropropylene, polytetrafluoroethylene, or polyhexafluoropropylene.

In some embodiments, the porosity of the lithium supplement layer is 3% to 7%.

By controlling the porosity of the lithium supplement layer, this application reduces the probability of the electrolyte solution penetrating into the lithium supplement layer, and further avoids side reactions and reduces gas production.

**In** some embodiments, the constituents of the positive active layer include a positive active material, a conductive agent, and a binder.

**In** some embodiments, based on a total mass of the positive electrode lithium supplement material and the positive active material, a mass percent of the positive electrode lithium supplement material is 1% to 15%.

By controlling the mass percent of the positive electrode lithium supplement material, the positive electrode plate is coated with sufficient active material while ensuring a good lithium supplement effect, thereby further increasing the energy density of the secondary battery.

In some embodiments, in the positive active layer, a mass percent of the positive active material is 80% to 90%, a mass percent of the binder is 5% to 10%, and a mass percent of the conductive agent is 5% to 10%.

In some embodiments, in the positive active layer, the conductive agent may be a conductive agent commonly used in the art, including but not limited to, at least one of graphite, carbon nanotubes, nanofibers, carbon black, or graphene. Specifically, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

The positive active material may be a positive active material commonly used in this application. Further, as an example, the positive active material may include at least one of the following materials: an olivine-structured lithium-containing phosphate salt, a lithium transition metal oxide, or a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate salt may include, but are not limited to, at least one of lithium iron phosphate (such as LiFePO₄ (LFP for short)), lithium manganese phosphate (such as LiMnPO₄), or lithium manganese iron phosphate.

In some embodiments, the molecular formula of the positive active material is: LiFeₓMn₍₁₋ₓ₎PO₄, where x is any number from 0 to 1.

Understandably, when x is 0, LiFeₓMn₍₁₋ₓ₎PO₄ is LiMnPO₄, that is, lithium manganese phosphate; and, when x is 1, LiFePO₄ is LiFePO₄, that is, lithium iron phosphate.

In the positive active layer, the binder may be a positive electrode binder commonly used in this field, including but not limited to, at least one of polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), or fluorine-containing acrylate resin.

In some embodiments, the current collector may be a metal foil or a composite current collector. The composite current collector includes at least one metal surface. For example, the metal foil may be aluminum foil. The composite current collector may include a polymer material substrate and a metal layer formed on at least one surface of the polymer material substrate. The composite current collector may be formed by disposing a metal material on a polymer material substrate.

The metal material includes at least one of aluminum, aluminum alloy, nickel, nickel alloy, titanium, titanium alloy, silver, or silver alloy. The polymer material substrate includes at least one of polypropylene (PP), polyethylene terephthalate (PET), polybutylene terephthalate (PBT), polystyrene (PS), or polyethylene (PE).

A method for preparing the positive electrode plate includes the following step S10.

Step S10: Forming a lithium supplement layer and a positive active layer sequentially on the surface of the current collector.

Understandably, the step of forming the positive active layer in this application is performed by coating. The coating includes but is not limited to print coating, blade coating, spin coating, and inkjet coating.

In some embodiments, the lithium supplement layer may be formed with reference to the steps of forming the positive active layer: mixing the constituents of the lithium supplement layer with a solvent to form a solution, and then performing coating, including but not limited to, print coating, blade coating, spin coating, or inkjet coating. Each solvent is at least one independently selected from N-methyl-pyrrolidone (NMP), N,N-dimethylformamide, ethanol, ethylene glycol, methanol, or isopropanol. Specifically, the solvent is N-methyl-pyrrolidone (NMP).

Alternatively, the lithium supplement layer may be formed by directly mixing and compacting the constituents of the lithium supplement layer onto the current collector.

A secondary battery is provided in an embodiment of this application. The secondary battery includes the positive electrode plate disclosed in the first aspect.

The secondary battery is characterized by a small amount of gas production and excellent cycle performance.

Further, the secondary battery further includes a negative electrode plate and a separator. The separator is disposed between the positive electrode plate and the negative electrode plate.

The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

Further, the negative electrode plate includes a current collector and a negative active layer loaded on the current collector. The constituents of the negative active layer include a negative active material, a conductive agent, and a binder.

The negative active material in the negative active layer is a negative active material commonly used in this application. Further, as an example, the negative active material may include at least one of the following materials: artificial graphite, natural graphite, soft carbon, hard carbon, silicon-based material, tin-based material, lithium titanium oxide, or the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In the negative active layer, the binder may be at least one of polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), or fluorine-containing acrylate resin.

In some embodiments, in the negative active layer, the conductive agent may be a conductive agent commonly used in the art, including but not limited to, at least one of graphite, carbon nanotubes, nanofibers, carbon black, or graphene. Specifically, the conductive agent may be at least one selected from SP, KS-6, acetylene black, branched Ketjen black ECP, SFG-6, vapor-grown carbon fibers VGCF, carbon nanotubes CNTs, graphene, or a composite conductive agent compounded thereof.

In some embodiments, the positive electrode plate, the negative electrode plate, and the separator may be made into an electrode assembly by winding or stacking.

Further, the secondary battery further includes an outer package and an electrolyte solution. The electrolyte solution and the electrode assembly are accommodated in the outer package.

In some embodiments, the electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes a functional additive. For example, the functional additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

The secondary battery may be prepared by a conventional method in this field. For example, the method for preparing a secondary battery includes: sequentially winding (or stacking) a positive electrode plate, a separator, and a negative electrode plate to obtain a battery cell, where the separator is located between the positive electrode plate and the negative electrode plate to serve a separation function; and then placing the battery cell into an outer package, injecting an electrolyte solution, and performing sealing to obtain a secondary battery.

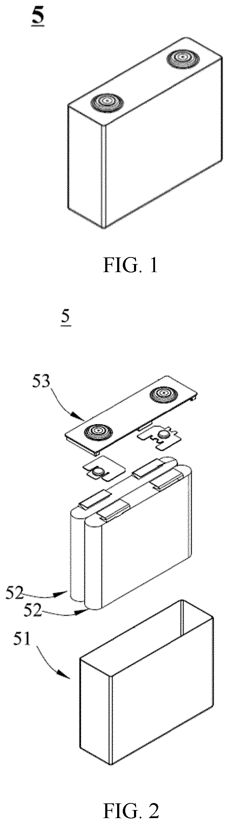

The shape of the secondary battery is not particularly limited in this application, and may be cylindrical, prismatic, or any other shape. FIG. 1 shows a prismatic secondary battery 5 as an example.

In some embodiments, referring to FIG. 2, the outer package may include a housing body 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity.

The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in the secondary battery 5 may be one or more, and is adjustable as required.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic such as one or more of polypropylene (PP), polybutylene terephthalate (PBT), or polybutylene succinate (PBS).

In some embodiments, the secondary battery may be assembled to form a battery module. The battery module may contain a plurality of secondary batteries, and the specific number of the secondary batteries in a battery module may be adjusted according to practical applications and capacity of the battery module.

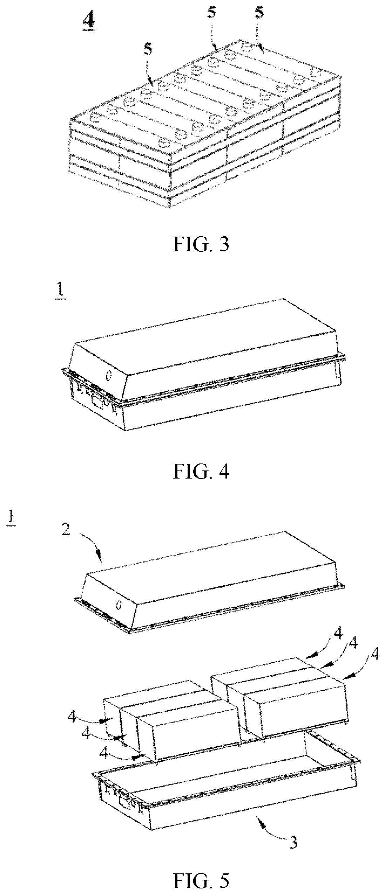

FIG. 3 shows a battery module 4 as an example. In the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The number of the battery modules contained in a battery pack may be adjusted according to practical applications and the capacity of the battery pack.

FIG. 4 and FIG. 5 show a battery pack 1 as an example. The battery pack 1 may contain a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

This application further provides an electrical device. The electrical device includes at least one of the secondary battery, the battery module, or the battery pack.

The secondary battery, the battery module, or the battery pack may be used as a power supply of the electrical device, or used as an energy storage unit of the electrical device.

The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, battery module, or battery pack may be selected for use in the electrical device depending on practical requirements of the electrical device.

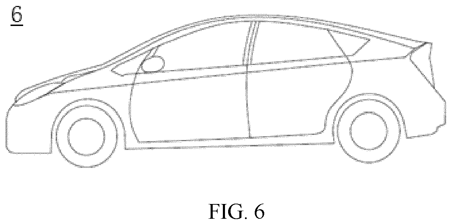

FIG. 6 shows an electrical device 6 as an example. The electrical device 6 may be battery electric vehicle, a hybrid electric vehicle, a plug-in hybrid electric vehicle, or the like. The electrical device may adopt a battery pack or a battery module in order to meet the requirements of the electrical device 6 on a high power and a high energy density of the secondary battery.

In another example, the electrical device may be a mobile phone, a tablet computer, a notebook computer, or the like. The device is generally required to be thin and light, and may have a secondary battery as a power supply.

This application is described below with reference to specific embodiments, but is not limited to such embodiments. Understandably, the claims appended hereto outlines the scope of this application. A person skilled in the art is aware that all modifications made to various embodiments of this application under the guidance of the conception hereof are covered by the spirit and scope of the claims of this application.

Described below are specific embodiments.

### Embodiment 1

### (1) Preparing a positive electrode plate

Mixing Li₅FePO₄ as a lithium supplement material, Li₇P₃S₁₁ as a solid electrolyte material, and CNT as a conductive agent at a mass ratio of 80: 12: 8, stirring well, and then adding NMP as a solvent to obtain a positive electrode lithium supplement slurry. Subsequently, applying the positive electrode lithium supplement slurry evenly onto one surface of a 12 um-thick aluminum foil, and performing oven-drying and cold-pressing to form a lithium supplement layer.

Testing the porosity of the lithium supplement layer by using a true density tester. The specific test results are shown in Table 1.

Mixing a positive active material LiFePO₄ (LFP), a conductive agent (CNT), and a binder (PVDF) evenly at a mass ratio of 90: 5: 5, and then adding NMP as a solvent. Stirring the mixture by using a vacuum mixer until the system is homogeneous, so as to obtain a positive active slurry. Applying the positive active slurry evenly onto the surface of the lithium supplement layer. Performing oven-drying and cold-pressing to form a positive active layer with a porosity of 25% and obtain a positive electrode plate.

The original mass of the aluminum foil is T₀. The total mass of the aluminum foil and the lithium supplement layer formed on the aluminum foil is T₁. The total mass of the aluminum foil, the lithium supplement layer, and the positive active material formed on the aluminum foil is T₂. The mass of the lithium supplement layer = T₁ - T₀, so that the mass of the lithium supplement material contained in the lithium supplement layer is calculated based on the mass percent of the lithium supplement material in the lithium supplement layer. The mass of the positive active layer = T₂ - T₁, so that the mass of the positive active material contained in the positive active layer is calculated based on the mass percent of the positive active material in the positive active layer.

The value of T is calculated as: T = mass of lithium supplement material/(mass of lithium supplement material + mass of positive active material) × 100%.

(2) Preparing a negative electrode plate: Mixing artificial graphite as an active material, acetylene black as a conductive agent, styrene-butadiene rubber (SBR) as a binder, and sodium carboxymethyl cellulose (CMC) as a thickener at a mass ratio of 96.5: 0.7: 1.8: 1 in a deionized water solvent system, stirring well to form a negative active slurry. Applying the negative active slurry onto a current collector copper foil, and performing oven-drying and cold-pressing to obtain a negative electrode plate.

(3) Preparing an electrolyte solution: Mixing ethylene carbonate, ethyl methyl carbonate, and diethyl carbonate at a volume ratio of 1: 1: 1 in an environment in which the water content is less than 10 ppm, so as to form a nonaqueous organic solvent used as an electrolyte solvent. Subsequently, dissolving a lithium salt LiPF₆ in the mixed solvent to obtain an electrolyte solution in which the lithium salt concentration is 1 mol/L.

(4) Preparing a separator: Using a 14 µm-thick polyethylene film as a separator. Cutting the film into appropriate sizes based on the dimensions of the positive electrode plate and the negative electrode plate before the separator is put into use.

(5) Preparing a lithium-ion battery: Stacking the positive electrode plate, the separator, and the negative electrode plate sequentially in such a way that the separator is located between the positive electrode plate and the negative electrode plate to serve a separation function, and then winding the stacked structure to obtain an electrode assembly. Placing the electrode assembly into an outer packaging shell, performing drying and then injecting an electrolyte solution, and performing vacuum sealing to obtain a lithium-ion battery.

### Testing the performance of the lithium-ion battery

1. Testing the gas production amount: (charging and discharging conditions: charging the battery at a constant current of 1/3C until the voltage reaches 2.65 V, and then charging the battery at a constant current of 0.1C until the voltage reaches 4.2 V; subsequently, charging the battery at a constant voltage until the current drops to 0.05C, in which the test temperature is 25 °C, and the test pressure is a normal pressure (1 atmospheric pressure)).
   (1) Creating a hole on the surface of the battery cell, and connecting an external flowmeter to monitor the gas production volume in the first-cycle high-voltage charging and other circumstances, where the gas production volume is denoted as V₀.
   (2) Creating a hole on the surface of the battery cell, connecting an external pressure gauge to the battery cell, and performing the following charge-discharge processes: charging a lithium-ion battery at 45 °C and at a constant current of 1/3C until the voltage reaches 3.65 V, and then charging the battery at a constant voltage of 3.65 V until the current drops to 0.05C; leaving the battery to stand for 24 hours, and then discharging the battery at a current of 1/3C until the voltage reaches 2.5 V; recording the changed pressure readings, and recording the original pressure P₀ of the battery cell and the pressure P₁ of the battery cell after 150 days, separately, where the pressure is a pressure difference relative to the atmospheric pressure. The original pressure P₀ is 0, and the value of P₁ is shown in Table 1.

### 2. Testing the capacity retention rate

(1) Charging a lithium-ion battery at 45 °C and at a constant current of 1/3C until the voltage reaches 3.65 V, and then charging the battery at a constant voltage of 3.65 V until the current drops to 0.05 C. Leaving the battery to stand for 5 minutes, and then discharging the battery at a current of 1/3C until the voltage drops to 2.5 V, and recording the discharge capacity C₀ at this time.
(2) Subsequently, charging the lithium-ion battery at a constant current of 1.0C until the voltage reaches 3.65 V, leaving the battery to stand for 5 minutes, and then discharging the battery at a 1/3C rate until the voltage drops to 2.5 V, and recording the discharge capacity C₁ at this time.

Repeating the above step (2) for 200 cycles, and recording the discharge capacity C₂₀₀ of the lithium-ion battery at the end of the 200^{th} cycle. Calculating the capacity retention rate as P₂₀₀ = C₂₀₀/C₀ × 100%.

### Embodiments 2 to 3

Embodiments 2 to 3 are basically identical to Embodiment 1 except that, during preparation of the positive electrode lithium supplement slurry in step (1), the type of the lithium supplement material or solid electrolyte material is changed.

The remaining steps are the same as those in Embodiment 1. Specific parameters are set out in Table 1.

### Embodiments 4 to 9

Embodiments 4 to 9 are basically identical to Embodiment 1 except that, during preparation of the positive electrode lithium supplement slurry in step (1), the total mass of the lithium supplement material and the solid electrolyte material remains unchanged, and the mass ratio of the lithium supplement material to the solid electrolyte material is changed.

The remaining steps are the same as those in Embodiment 1. Specific parameters are set out in Table 1.

### Embodiments 10 to 12

Embodiments 10 to 12 are basically identical to Embodiment 1 except that, during preparation of the positive electrode plate in step (1), the mass ratio between the lithium supplement material, the solid electrolyte material, and the conductive agent is adjusted to be different from that in Embodiment 1, and the coating weight of the positive electrode lithium supplement layer is adjusted to keep the value of T identical to that in Embodiment 1.

The remaining steps are the same as those in Embodiment 1. Specific parameters are set out in Table 1.

### Embodiments 13 to 16

Embodiments 13 to 16 are basically identical to Embodiment 1 except that in step (2), during preparation of the positive electrode lithium supplement layer in step (1), the mass of the lithium supplement material contained in the lithium supplement layer is changed by controlling the coating weight, thereby changing the value of T. The specific parameters are set out in Table 1.

The remaining steps are the same as those in Embodiment 1. Specific parameters are set out in Table 1.

### Embodiments 17 to 18

Embodiments 17 to 18 are basically identical to Embodiment 1 except that the porosity of the lithium supplement layer is adjusted by adjusting the process parameters such as viscosity of the positive electrode lithium supplement slurry and the cold-pressing pressure.

The remaining steps are the same as those in Embodiment 1. Specific parameters are set out in Table 1.

### Comparative Embodiment 1

Comparative Embodiment 1 is basically identical to Embodiment 1 except that in step (1), the lithium supplement material is directly mixed into the positive active slurry, and then uniformly applied onto one surface of a 12 µm-thick aluminum foil, and the foil is oven-dried and cold-pressed to obtain a positive electrode plate, where the total mass of and the mixing ratio between the lithium supplement material and the positive active material LiFePO₄ (LFP) are identical to those in Embodiment 1.

The remaining steps are the same as those in Embodiment 1. Specific parameters are set out in Table 1.

### Comparative Embodiment 2

Comparative Embodiment 2 is basically identical to Embodiment 1 except that in step (1), the positive active slurry is applied evenly onto the surface of the aluminum foil directly, and performing oven-drying and cold-pressing to form a positive active layer and obtain a positive electrode plate.

The remaining steps are the same as those in Embodiment 1. Specific parameters are set out in Table 1.

### Comparative Embodiment 3

Comparative Embodiment 3 is basically identical to Embodiment 1 except that in step (1), the composition of the positive electrode lithium supplement layer is 80 wt% LiFeO₄ + 10 wt% CNT + 10 wt% binder (PVDF); and the lithium supplement slurry is prepared by mixing the lithium supplement material, the conductive agent, and the binder thoroughly through ball-milling to obtain a mixed slurry.

The remaining steps are the same as those in Embodiment 1. Specific parameters are set out in Table 1.

The relevant physical parameters and test results of each embodiment and comparative embodiment are set out in Table 1.

**Table 1 (To be continued)**

| | Composition of positive electrode lithium supplement layer | T |
|---|---|---|
| Embodiment 1 | 80% Li₅FeO₄ + 12% Li₇P₃S₁₁ + 8% CNT | 2% |
| Embodiment 2 | 80% Li₅FeO₄ + 14% Li₂AlTi(PO₄)₃ + 6% CNT | 2% |
| Embodiment 3 | 80% Li₂NiO₂ + 14% Li₂AlTi(PO₄)₃ + 6% CNT | 2% |
| Embodiment 4 | 80% Li₅FeO₄ + 10% Li₇P₃S₁ + 10% CNT | 2% |
| Embodiment 5 | 80% Li₅FeO₄ + 14% Li₇P₃S₁ + 6% CNT | 2% |
| Embodiment 6 | 80% LisFeO₄ + 16% Li₇P₃S₁ + 4% CNT | 2% |
| Embodiment 7 | 80% Li₅FeO₄ + 18% Li₇P₃S₁ + 2% CNT | 2% |
| Embodiment 8 | 80% LisFeO₄ + 18.18% Li ₇P₃S₁ + 1.82% CNT | 2% |
| Embodiment 9 | 80% LisFeO₄ + 18.3% Li₇P₅S₁ + 1.7% CNT | 2% |
| Embodiment 10 | 60% Li₅FeO₄ + 24% Li₁₇P₃S₁₁ + 16% CNT | 2% |
| Embodiment 11 | 95% Li₅FeO₄ + 3% Li₇P₃S₁₁ + 2% CNT | 2% |
| Embodiment 12 | 40% LisFeO₄ + 36% Li₇P₃S₁₁ + 24% CNT | 2% |
| Embodiment 13 | 80% Li₅FeO₄ + 12% Li₇P₃S₁₁ + 8% CNT | 1% |
| Embodiment 14 | 80% Li₅FeO₄ + 12% Li₇P₃S₁₁ + 8% CNT | 5% |
| Embodiment 15 | 80% Li₅FeO₄ + 12% Li₇P₃S₁₁ + 8% CNT | 10% |
| Embodiment 16 | 80% LisFeO₄ +12% Li₇P₃S₁₁ + 8% CNT | 15% |
| Embodiment 17 | 80% Li₅FeO₄+ 12% Li₇P₃S₁₁ + 8% CNT | 2% |
| Embodiment 18 | 80% Li₅FeO₄+ 12% Li₇P₃S₁₁ + 8% CNT | 2% |
| Comparative 1 | / | / |
| Comparative 2 | / | / |
| Comparative Embodiment 3 | 80% Li₅FeO₄ + 10% CNT + 10% binder (PVDF) | 2% |

| | | |
|---|---|---|
| Note: "/" indicates absence, and "%" in the composition of the positive electrode lithium supplement layer represents mass percent. | | |

**Table 1 (Continued)**

| | Porosity (%) | V₀ (mL) | P₀ (MPa) | P₁ (MPa) | Capacity retention rate P₂₀₀ (%) |
|---|---|---|---|---|---|
| Embodiment 1 | 5 | 60 | 0 | 0.05 | 90 |
| Embodiment 2 | 5 | 60 | 0 | 0.05 | 90 |
| Embodiment 3 | 5 | 70 | 0 | 0.06 | 88 |
| Embodiment 4 | 5 | 60 | 0 | 0.05 | 88 |
| Embodiment 5 | 5 | 60 | 0 | 0.05 | 86 |
| Embodiment 6 | 5 | 60 | 0 | 0.05 | 85 |
| Embodiment 7 | 5 | 60 | 0 | 0.05 | 85 |
| Embodiment 8 | 5 | 60 | 0 | 0.05 | 80 |
| Embodiment 9 | 5 | 60 | 0 | 0.05 | 75 |
| Embodiment 10 | 5 | 60 | 0 | 0.05 | 86 |
| Embodiment 11 | 5 | 60 | 0 | 0.05 | 85 |
| Embodiment 12 | 5 | 60 | 0 | 0.05 | 91 |
| Embodiment 13 | 5 | 50 | 0 | 0.03 | 80 |
| Embodiment 14 | 5 | 80 | 0 | 0.07 | 92 |
| Embodiment 15 | 5 | 180 | 0 | 0.09 | 94 |
| Embodiment 16 | 5 | 220 | 0 | 0.10 | 96 |
| Embodiment 17 | 3 | 80 | 0 | 0.06 | 90 |
| Embodiment 18 | 7 | 55 | 0 | 0.04 | 88 |
| Comparative 1 | 25% | 800 | 0 | 0.25 | 90 |
| Comparative 2 | 25% | 50 | 0 | 0.02 | 72 |
| Comparative Embodiment 3 | 5 | 750 | 0 | 0.23 | 82 |

| | | | | | |
|---|---|---|---|---|---|
| Note: "/" indicates absence, and "%" in the composition of the positive electrode lithium supplement layer represents mass percent. | | | | | |

As can be seen from the experimental results in the above table, the lithium-ion battery prepared from the positive electrode plate of this application incurs a relatively small amount of gas production and can maintain a relatively high capacity during charge-discharge cycles.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description goes to details, but is in no way to be thereby understood as a limitation on the patent scope hereof. It is hereby noted that several variations and improvements, which may be made to the embodiments by a person of ordinary skill in the art without departing from the concept of this application, fall within the protection scope of this application. Therefore, the patent protection scope of this application is subject to the claims appended hereto, and the specification and the accompanying drawings may be used for interpreting the subject-matter of the claims.

## Claims

1. A positive electrode plate, **characterized in that** the positive electrode plate comprises a current collector and a lithium supplement layer and a positive active layer that are sequentially loaded onto a surface of the current collector; and
constituents of the lithium supplement layer comprise a positive electrode lithium supplement material, a solid electrolyte material, and a conductive agent.

2. The positive electrode plate according to claim 1, **characterized in that** a mass ratio of the solid electrolyte material to the conductive agent is (1 to 11): 1.

3. The positive electrode plate according to claim 1, **characterized in that** a mass ratio of the solid electrolyte material to the conductive agent is (1 to 10): 1.

4. The positive electrode plate according to claim 1, **characterized in that** a total mass percent of the solid electrolyte material and the conductive agent in the lithium supplement layer is not greater than 60%.

5. The positive electrode plate according to any one of claims 1 to 4, **characterized in that** a total mass percent of the solid electrolyte material and the conductive agent in the lithium supplement layer is 10% to 60%.

6. The positive electrode plate according to any one of claims 1 to 5, **characterized in that** a mass percent of the positive electrode lithium supplement material in the lithium supplement layer is 40% to 95%.

7. The positive electrode plate according to any one of claims 1 to 6, **characterized in that** the constituents of the lithium supplement layer further comprise a binder, and a mass percent of the binder in the lithium supplement layer is 0 to 10%.

8. The positive electrode plate according to any one of claims 1 to 7, **characterized in that** a porosity of the lithium supplement layer is 3% to 7%.

9. The positive electrode plate according to any one of claims 1 to 8, **characterized in that** the constituents of the positive active layer comprise a positive active material, a conductive agent, and a binder.

10. The positive electrode plate according to claim 9, **characterized in that**, based on a total mass of the positive electrode lithium supplement material and the positive active material, a mass percent of the positive electrode lithium supplement material is 1% to 15%.

11. The positive electrode plate according to claim 9, **characterized in that** in the positive active layer, a mass percent of the positive active material is 80% to 90%, a mass percent of the binder is 5% to 10%, and a mass percent of the conductive agent is 5% to 10%.

12. The positive electrode plate according to any one of claims 1 to 11, **characterized in that** an ionic conductivity of the solid electrolyte material at 25 °C is not less than 1 mS/cm.

13. The positive electrode plate according to any one of claims 1 to 12, **characterized in that** the solid electrolyte material comprises at least one of a sulfide solid electrolyte material, an oxide solid electrolyte material, a halide solid electrolyte material, or a polymer solid electrolyte material.

14. The positive electrode plate according to any one of claims 1 to 13, **characterized in that** the positive electrode lithium supplement material comprises at least one of Li₂M1O₂, Li₂M2O₃, Li₅FeₓM3₍₁₋ₓ₎O₄, or Li₆Mn_{y}M4_{(1-y)}O₄, wherein
M1 comprises at least one of Ni, Mn, Cu, Fe, Cr, or Mo; M2 comprises at least one of Ni, Mn, Fe, Mo, Zr, Si, Cu, Cr, or Ru; M3 comprises at least one of Al, Nb, Co, Mn, Ni, Mo, Ru, or Cr; and M4 comprises at least one of Ni, Fe, Cu, or Ru; and 0 ≤ x ≤ 1, and 0 ≤ y ≤ 1.

15. A secondary battery, **characterized in that** the secondary battery comprises the positive electrode plate according to any one of claims 1 to 14.

16. A battery module, **characterized in that** the battery module comprises the secondary battery according to claim 15.

17. A battery pack, **characterized in that** the battery pack comprises the secondary battery according to claim 15 or the battery module according to claim 16.

18. An electrical device, **characterized in that** the electrical device comprises at least one of the secondary battery according to claim 15, the battery module according to claim 16, or the battery pack according to claim 17.
